# EUROPÄISCHE PATENTSCHRIFT

(11) **EP 1 164 349 B1**
(45) Veröffentlichungstag und Bekanntmachung des Hinweises auf die Patenterteilung: **09.04.2003**
(21) Anmeldenummer: 01121108.3
(22) Anmeldetag: 14.07.1998
(51) Int. Cl.: F42B 3/12, F42B 3/18

(54) **Zündeinrichtung für eine Insassenschutzvorrichtung eines Kraftfahrzeugs**
Ignition unit for a passenger protection device of a motor vehicle
Unité d'allumage pour un dispositif pyrotechnique de protection des occupants d'un véhicule automobile

(30) Priorität: 01.08.1997 DE 19733353
(43) Veröffentlichungstag der Anmeldung: 19.12.2001
(62) Teilanmeldung aus: 98943693.6
(73) Patentinhaber: NICO-PYROTECHNIK HANNS-JÜRGEN DIEDERICHS GMBH & CO. KG, D-22946 Trittau (DE)
(72) Erfinder: Lübbers, Willi, 22958 Kuddewörde (DE)
(74) Vertreter: Haft, von Puttkamer, Berngruber, Czybulka

(56) Entgegenhaltungen:
- EP-A- 0 029 671
- EP-A- 0 658 739
- DE-A- 4 429 175
- FR-A- 2 087 044
- US-A- 5 648 634

## Beschreibung

Die Erfindung betrifft eine Zündeinrichtung für eine Insassenschutzvorrichtung eines Kraftfahrzeuges, insbesondere für ein aufblasbares Aufprallschutzkissen (Airbag).

Zündeinrichtungen für Insassenschutzvorrichtungen eines Kraftfahrzeuges z.B. Gurtstraffer- oder Airbagsysteme sind aus der DE 4102275 C1 bekannt. Derartige Zündeinrichtungen weisen in einer Zündkammer als Zündelement einen niederohmigen Widerstandsdraht sowie einen Zündstoff auf, der bei ausreichender Erwärmung bzw. beim Schmelzen des Widerstandsdrahtes gezündet wird.

Die deutsche Offenlegungsschrift DE 4429175 A1 offenbart eine Zündeinrichtung mit einem Gehäuse aus einer Metall-Legierung und mit einem im Gehäuse eingelegten Passring, in dem sich ein Glasisolator befindet. In diesem Isolator sind Kontaktstifte eingeschmolzen, deren in die Zündkammer hineinragende Enden mit der Stirnseite des Isolators abschliessen und mit einem angeschweissten Widerstandsdraht verbunden sind, der als Zündelement fungiert.

Ein Problem bei derartigen Zündeinrichtungen sind Überspannungen, die eine Fehlzündung auslösen können. Daher müssen diese Überspannungen abgeleitet werden, wozu im allgemeinen als Überspannungsableiter eine Soll-Funkenstrecke ausgebildet wird. Die Soll-Funkenstrecke ist die kürzeste Strecke zwischen zwei unterschiedlichen leitenden Teilen innerhalb der Zündeinrichtung.

Bei der Zündeinrichtung gemäß der genannten DE 4429175 A1 wird eine Funkenstrecke durch einen dafür vorgesehenen galvanisch leitenden Ring gebildet, der einen Spalt zu den die Signale der Auslöse- und Überwachungselektronik übertragenden Kontaktstiften frei lässt. Etwaige Funken werden somit vom Gehäuse auf die Kontaktstifte und nicht auf den Zünddraht übertragen.

Von diesem Stand der Technik geht die Erfindung aus.

Es hat sich jedoch gezeigt, dass bei Überspannungen von bereits einigen Kilovolt (kV) diese Überspannungen nicht mehr über die Fünkenstrecke abgeführt werden können, sodass der Zündstoff durch einen zweiten oder weiteren Funken gezündet wird.

Des Weiteren erfordert der Einbau des galvanisch leitenden Ringes oder äquivalenter Elemente zur Bildung einer Funkenstrecke weitere Abdichtungsmaßnahmen und kostenintensive Herstellungsschritte bei einer gleichzeitigen Vergrößerung der Gesamtabmessungen der Einrichtung. Außerdem kann es zwischen Ring und Passring im Laufe der Zeit zu Korrosionen kommen, durch die der elektrische Kontakt zwischen diesen Teilen verloren geht, sodass die Funkenstrecke nicht mehr wirksam ist.

Die FR 2087044 A beschreibt eine Zündvorrichtung für Sprengladungen, die gegen elektrostatische Überspannungen gesichert ist. Die Vorrichtung weist einen elektrisch leitenden Ring auf, der in die Zündvorrichtung in elektrischem Kontakt mit dem Gehäuse eingesetzt ist und die dünnen, zu einer Sprengkapsel führenden Zünddrähte mit Abstand umgibt. Die Innenwand des Ringes kann hierbei aufgeraut und z. B. mit einem Gewinde versehen sein, sodass ein Funkenübersprung bei Überspannungen erleichtert wird.

Die dünnen Drähte gewährleisten jedoch keinen reproduzierbaren Abstand zu dem Ring; es kann sogar zu Kurzschlüssen kommen. Außerdem ist wiederum Korrosion an den Berührungsflächen zwischen Ring und anderen Teilen des Gehäuses möglich, sodass eine sichere Langzeitfunktion der Zündvorrichtung nicht gewährleistet ist.

Der Erfindung liegt die Aufgabe zugrunde, die Zündeinrichtung mit einem integrierten Überspannungsableiter zu versehen, der keine zusätzlichen Elemente sowie Herstellungsschritte erfordert und mit dem auch hohe Überspannungen zuverlässig abgeleitet werden.

Diese Aufgabe wird erfindungsgemäß durch die Merkmale des Patentanspruchs 1 gelöst.

Weitere Ausgestaltungen der Erfindung gehen aus den Unteransprüchen hervor.

Erfindungsgemäß wird somit zum Einen durch die Einstückigkeit von Passring und Fortsatz jede Korrosion vermieden, sodass die Funktion der Funkenstrecke auch über lange Zeit gesichert ist; zum Anderen wird anstelle der bisher bekannten nahezu punktförmigen Funkenstrecken eine relativ großflächige bzw. lineare Funkenstrecke als Überspannungsableiter vorgesehen. Die Innenwand des Fortsatzes ist hierzu aufgeraut und mit einer Vielzahl von Spitzen oder spitzen Stegen, vorzugsweise mit einem Gewinde versehen, so dass bei Auftreten einer Überspannung auch mehrere Funken gleichzeitig überspringen können. Dies hat den Vorteil, dass bei höheren Überspannungen mehrere Funken gleichzeitig überspringen können und die Überspannung zuverlässig ohne Zünden der Zündeinrichtung abgeführt wird. Aufgrund der Geometrie und Anordnung der Elemente der Zündeinrichtung wird kein zusätzliches zu diesem Zweck eingebautes Element benötigt.

Die Funkenstrecke gemäß der Erfindung wird bevorzugt dadurch erzielt, dass die Kontaktstifte von dem elektrisch leitenden Fortsatz des Gehäuses über eine erhebliche Länge der Hälse der Kontaktstifte umgeben werden. Diese Länge wird z. B. etwa vergleichbar dem Umfang der Kontaktstifte gewählt.

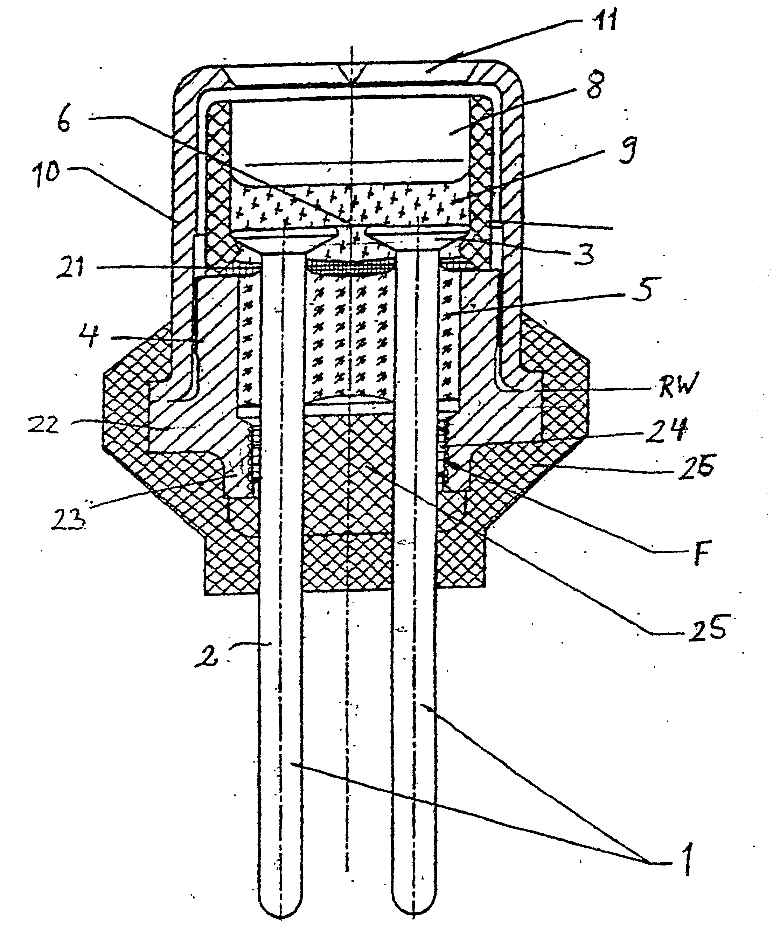

Im folgenden wird die Erfindung anhand einer Ausführungsform unter Bezugnahme auf die beigefügte Figur näher erläutert, in der eine Schnittansicht einer Zündeinrichtung mit integriertem Überspannungsableiter gemäß der vorliegenden Erfindung dargestellt ist.

Gemäß der Figur werden nagelförmig ausgebildete Kontaktstifte 1, die einen Hals 2 und einen Kopf 3 aufweisen, in einem Passring 4 in ein isolierendes Glasmaterial 5 eingeschmolzen und sitzen in definiertem Abstand voneinander fest. Die Köpfe 3 der Kontaktstifte 1 ragen aus dem Passring 4 heraus. Ein Widerstandsdraht 6 wird an den Köpfen 3 der Kontakshfte 1 angeschweisst. Auf den Passring 2 wird eine Satzhülse 7 aufgesetzt. Diese Hülse 7 wird mit dem Passring 4 verbunden.

Das dadurch entstandene Volumen bildet eine Zindkammer 8.

Auf den Boden der Zündkammer 8 wird ein Dichtmittel 21 aufgebracht; danach wird die Zündkammer mit fließfähigem Zündstoff 9 aufgefüllt, der anschliessend erstarrt. Danach wird eine Metallkappe 10 aufgesetzt, die an ihrer Stirnseite eine Berstfläche 11 aufweist und mit ihrem Rand auf der gegenüber liegenden Seite mit einem radialen Flansch 22 des Passringes 4 durch Widerstandsschweißen bei RW verbunden wird.

Auf der den Köpfen 3 der Kontaktstifte 1 abgewandten Seite des Passringes 4 weist dieser einen zylindrischen Fortsatz 23 auf, der die Kontaktstifte 1 über eine relativ lange Strecke umhüllt. Zwischen der Innenwand des Fortsatzes 23 und den Kontaktstiften 1 wird eine Funkenstrecke F ausgebildet. Der radiale Abstand zwischen dem Fortsatz 23 und dem jeweiligen Kontaktstift 1 ist kleiner als der Abstand zwischen den Köpfen 3 der Kontaktstifte 1 und der Metallkappe 10. Dadurch werden bei Überspannungen etwaige Funken vom Gehäuse 4, 10 auf die Kontaktstifte 1 und nicht auf die Köpfe 3 überspringen. Bei einer Überspannung können die Funken über den gesamten Umfang der Kontaktstifte überspringen. Die axiale Länge des Fortsatzes 23 ist so gewählt, dass bei hohen Überspannungen mehrere Funken gleichzeitig überspringen können.

Die radiale Breite der Funkenstrecke F beträgt vorzugsweise 0,3 mm, kann aber jeden geeigneten Wert zwischen 0,1 mm und 0,9 mm annehmen.

Der den Kontaktstiften zugewandte Innenrand des Fortsatzes ist aufgerauht, z. B. nach Art eines Gewindes 24 bzw. eines Feingewindes ausgebildet, um den Funkenübersprung zu erleichtern.

Der Fortsatz 23 wird mit einem Pfropfen 25 aus elektrisch isolierendem Material verschlossen, wobei die Funkenstrecke F frei bleibt. Der Pfropfen 25, die Kontaktstifte 1 und der der Zündkammer 8 abgewandte Rand der Kappe 10 sind von einem Kunststoffmantel 26 umhüllt, wodurch die Stabilität der Einrichtung erhöht wird und wodurch ein zusätzlicher Schutz gewährleistet wird.

## Patentansprüche

1. Zündeinrichtung für eine Insassenschutzvorrichtung eines Kraftfahrzeuges und insbesondere für ein aufblasbares Aufprallschutzkissen (Airbag), mit zwei in einem elektrisch leitenden Passring (4) aus Metall, der mit elektrisch isolierendem Material (5) ausgefüllt ist, eingesetzten Kontaktstiften (1), wobei auf dem Passring ein kappenförmiges Gehäuse (7, 10) aufgesetzt ist, sodass zwischen Passring (4) und Gehäuse (7, 10) eine Zündkammer (8) gebildet wird, die mit Zündstoff (9) gefüllt ist, wobei zwischen den in die Zündkammer (8) reichenden Oberseiten der Kontaktstifte (1) ein elektrisch mit diesen verbundener Widerstandsdraht (6) vorgesehen ist und wobei ferner zwischen elektrisch leitenden und mit dem Passring verbundenen Teilen des Gehäuses (7, 10) und den Kontaktstiften (1) eine Funkenstrecke (F) ausgebildet ist, die eine Dimension hat, die kleiner als der ansonsten kleinste Abstand zwischen den elektrisch leitenden Teilen des Gehäuses und den Kontaktstiften ist, **dadurch gekennzeichnet, dass** der Passring (4) einen mit diesem einstückigen Fortsatz (23) aufweist, der die Kontaktstifte (1) umgibt und zwischen dessen Innenwand und den Kontaktstiften (1) die Funkenstrecke (F) gebildet wird, und dass die Innenwand des Fortsatzes (23) mit einer Vielzahl von Spitzen oder spitzen Stegen (24) versehen ist.

2. Zündeinrichtung nach Anspruch 1, **dadurch gekennzeichnet, dass** die Innenwand des Fortsatzes (23) mit einem Gewinde versehen ist.

3. Zündeinrichtung nach einem der vorhergehenden Ansprüche, **dadurch gekennzeichnet, dass** die Funkenstrecke eine radiale Breite zwischen 0,1 mm und 0,9 mm, vorzugsweise etwa 0,3 mm aufweist.

4. Zündeinrichtung nach einem der vorherigen Ansprüche, **dadurch gekennzeichnet, dass** der Fortsatz (23) mit einem elektrisch isolierendem Pfropfen (24) verschlossen ist, der die Funkensstrecke (F) frei lässt.

## Claims

1. Ignition device for a motor vehicle occupant protection mechanism and in particular for an inflatable impact protection cushion (airbag), with two contact pins (1) which are set in an electro-conductive gauge ring (4) made of metal and filled with electrically insulating material (5), with a cap-shaped casing (7, 10) set on the gauge ring, thereby forming between the gauge ring (4) and the casing (7, 10) an ignition chamber (8) filled with inflammable matter (9), and between the upper faces of the contact pins (1) which extend into the ignition chamber (8) there being provided a resistance wire (6) connected electrically to said pins (1), and furthermore, between on the one hand parts of the casing (7, 10) that are electro-conductive and joined to the gauge ring, and on the other hand the contact pins (1), there being formed a spark gap (F) that is smaller in size than the otherwise minimum distance between the electro-conductive parts of the casing and the contact pins, **characterised in that** the gauge ring (4) incorporates an extension piece (23) which is integral therewith and which surrounds the contact pins (1), and the spark gap (F) is constituted between the inside wall of said extension piece (23) and the contact pins (1), and that the inside wall of the extension piece (23) is provided with a multiplicity of tips or pointed lands (24).

2. Ignition device according to claim 1, **characterised in that** the inside wall of the extension piece (23) is provided with a thread.

3. Ignition device according to either of the preceding claims, **characterised in that** the spark gap has a radial width of between 0.1 mm and 0.9 mm, preferably approximately 0.3 mm.

4. Ignition device according to any of the preceding claims, **characterised in that** the extension piece (23) is sealed by an electrically insulating stopper (24) which leaves the spark gap (F) free.

## Revendications

1. Module d'amorçage pour dispositif de protection des occupants d'un véhicule à moteur, en particulier pour un coussin gonflable de protection contre les chocs ("Airbag"), comprenant deux connecteurs (1) montés dans une bague métallique d'ajustage (4) conductrice électriquement remplie de matériau électriquement isolant (5), dans lequel un boîtier en forme de capuchon (7, 10) est monté sur la bague d'ajustage, de sorte qu'une chambre d'amorçage (8), remplie de matériau explosif (9), est formée entre la bague d'ajustage (4) et le boîtier (7, 10), et dans lequel, entre les côtés supérieurs des connecteurs (1) dépassant dans la chambre d'amorçage (8), est prévu un fil résistif (6) électriquement relié à ceux-ci, et dans lequel, en outre, un passage à étincelles (F) est formé entre les connecteurs (1) et des parties du boîtier (7, 10) conductrices électriquement et reliées à la bague d'ajustage, le passage à étincelles (F) ayant une dimension plus petite que l'intervalle le plus petit entre les parties du boîtier conductrices électriquement et les connecteurs, **caractérisé en ce que** la bague d'ajustage (4) comporte un prolongement (23) formant une seule pièce avec celle-ci, qui entoure les connecteurs (1) et entre la paroi interne duquel et les connecteurs (1) le passage à étincelles (F) est formé, et **en ce que** la paroi interne du prolongement (23) est pourvue de plusieurs pointes ou nervures effilées (24).

2. Module d'amorçage selon la revendication 1, **caractérisé en ce que** la paroi interne du prolongement (23) comporte un filetage.

3. Module d'amorçage selon l'une des revendications précédentes, **caractérisé en ce que** le passage à étincelles présente une largeur radiale comprise entre 0,1 mm et 0,9 mm, de préférence environ 0,3 mm.

4. Module d'amorçage selon l'une des revendications précédentes, **caractérisé en ce que** le prolongement (23) est fermé à l'aide d'un tampon électriquement isolant (24) laissant libre le passage à étincelles (F).
